# EUROPÄISCHE PATENTSCHRIFT

(11) **EP 3 894 502 B1**
(45) Veröffentlichungstag und Bekanntmachung des Hinweises auf die Patenterteilung: **07.10.2026**
(21) Anmeldenummer: 18822314.3
(22) Anmeldetag: 11.12.2018
(51) Int. Cl.: C09J 9/00, C09J 11/02, C08K 5/00, C08K 5/23, C09B 27/00

(54) **WICKEL- UND STANZBARER KLEBENDER FILM**
ADHESIVE FILM THAT CAN BE WOUND AND STAMPED
FILM ADHÉSIF ENROULABLE ET EMBOUTISSABLE

(43) Veröffentlichungstag der Anmeldung: 20.10.2021
(73) Patentinhaber: Lohmann GmbH & Co. KG, 56567 Neuwied (DE)
(72) Erfinder: KÜHL, Oliver, 56587 Straßenhaus (DE); FRIEDLAND, Ruben, 56626 Andernach (DE); STAHL, Johannes, 56075 Koblenz (DE); HOSS, Cornelia, 56075 Koblenz (DE)
(74) Vertreter: Schulz, Oliver Frank Michael
(86) Internationale Anmeldenummer: PCT/EP2018/084413
(87) Internationale Veröffentlichungsnummer: WO 2020/119898

(56) Entgegenhaltungen:
- EP-A1- 0 889 106
- EP-B1- 3 105 276
- WO-A1-2018/008742
- WO-A1-2018/153985
- DE-A1- 102011 013 645
- JP-B2- 4 611 463

## Beschreibung

### Technisches Gebiet

Die vorliegende Erfindung betrifft einen durch ultraviolette Strahlung (UV) oder thermisch aktivierbaren und härtbaren, Wickel- und stanzbaren Klebfilm für strukturelle Verklebungen mit Farbumschlag nach Aktivierung, welcher im nicht aktivierten Zustand haftklebend ist. In diesem Sinne ist im Folgenden bei Bezugnahme auf UV-Aktivierung immer auch die ebenfalls mögliche thermische Aktivierung impliziert.

Die in den nachfolgenden Ausführungen verwendeten Begriffe sind dabei wie folgt zu verstehen:
Mit "klebender Film" ist im Folgenden jede Form von flächigen klebenden Systemen gemeint, also nicht nur Klebebänder im engeren Sinne, sondern auch Klebefolien, Klebestreifen, Klebeplatten oder klebende Stanzteile.

"Haftklebend" werden solche Klebeverbindungen genannt, bei denen die beiden Fügepartner durch eine dazwischen liegende Klebeschicht und unter Druck miteinander verbunden werden. Die Verbindung ist in der Weise reversibel, dass sie wieder gelöst werden kann, ohne die beiden Fügepartner zu beschädigen, weil die Klebenaht die schwächste Stelle in der Fügeverbindung ist.

Als "strukturell" werden Klebeverbindungen bezeichnet, bei denen die Fügepartner in der Weise miteinander verbunden werden, dass bei einer Trennung die Verbindung nicht unbedingt an der Klebenaht gelöst wird, sondern unter Umständen auch einer der Fügepartner die schwächste Stelle in der Verbindung sein kann und durch die Trennung dann beschädigt wird. Strukturelle Klebeverbindungen besitzen also hohe Festigkeiten. Die Festigkeiten, gemessen im quasistatischen Zug-Scherversuch, liegen bei strukturellen Verbindungen über 6 MPa. Übliche Werte, die für strukturelle Klebeverbindungen von Epoxidklebstoffen angestrebt werden, liegen bei 10 bis 20 MPa.

"Strahlenhärtung" bezeichnet einen Prozess, bei dem mit Hilfe von energiereicher Strahlung reaktive Materialien von einem niedermolekularen in einen hochmolekularen Zustand überführt werden.

Unter UV-Strahlung wird im vorliegenden Falle "UVA"- oder "UVC"-Licht verstanden.

UVA-Strahlung liegt im Wellenbereich von ca. 380 bis 315 Nanometer (nm), UVC-Strahlung liegt im Wellenbereich von ca. 280 bis 100 nm. Generell handelt es sich bei beiden um elektromagnetische Strahlung mit Wellenlängen, die kürzer als das sichtbare Licht sind. Bei UVA-Licht liegt der Energieeintrag bei ca. 3,26 bis 3,95 Elektronenvolt (eV), bei UVC-Licht bei ca. 4,43 bis 12,40 eV.

"Aktivierung" bedeutet das in Gang setzen eines Aushärteprozesses durch Bestrahlung mit UV- Licht, d.h. die im Klebstoff befindlichen Fotoinitiatoren werden durch Lichteinstrahlung aktiviert und stoßen den Aushärteprozess des Klebstoffs an, indem sie die Bildung von Polymerketten einleiten. Üblicherweise werden UV-härtende Klebstoffe nach dem Fügen der Klebepartner bestrahlt. Dazu bedarf es Substrate, die für die verwendete UV-Strahlung ausreichend durchlässig sind. Die Klebestelle wird dann so lange bestrahlt, bis die Aushärtung ausreichend fortgeschritten ist, das heißt eine ausreichende Festigkeit bietet. Folglich können nur Substrate, die UV-durchlässig sind auf diese Weise aktiviert und verklebt werden. Die endgültige Festigkeit des Klebstoffes stellt sich erst nach abgeschlossenem Aushärteprozess ein.

"Offene Zeit" bzw. "Offenzeit" ist die Zeit zwischen Klebstoffauftrag und Verklebung. In der Offenzeit verteilt sich beispielsweise ein flüssiger Schmelzklebstoff auf den zu verbindenden Oberflächen und sorgt für die nötige Haftung (Adhäsion). Da sich die Viskosität, d.h. die Zähflüssigkeit eines Klebstoffes nach dem Auftrag in der Regel erhöht, ist die Offenzeit bei Klebstoffen zeitlich begrenzt.

Die "Aushärtezeit" ist der Zeitraum zwischen der Fügung der Fügepartner und der endgültigen Festigkeit der Verbindung.

Mit "Dunkelreaktion" wird in der Folge die Tatsache bezeichnet, dass eine Härtungsreaktion durch kurzzeitige Bestrahlung des Klebstoffes mit UV-Licht angestoßen (angetriggert) wird und dann die komplette Aushärtung ohne weitere Bestrahlung erfolgen kann.

Mit thermischer Aktivierung ist das in Gang setzen des Aushärtungsprozesses durch Zugabe erhöhter Temperatur, d.h. in diesem Fall einer Temperatur von mindestens 140°C. gemeint.

Unter "Supersäure" ist Folgendes zu verstehen: Bei der kationischen UV-Härtung findet eine Ringöffnung am Oxiran und/oder Oxetan (Epoxidharze und Vinylether) statt. Dies geschieht durch Photolyse von z.B. Diaryliodoniumsalzen, die eine Erzeugung von starken Protonensäuren, sogenannten Supersäuren nach sich zieht. Das Säureproton öffnet den Epoxidring und startet das Kettenwachstum und damit die Härtung.

### Stand der Technik

Oftmals besteht die Basis von UV-härtenden Klebstoffen aus Acrylatmonomeren oder - oligomeren, die in einer durch UV-Licht induzierten Radikalkettenreaktion aushärten.

Dagegen werden UV-härtende Epoxidklebstoffe durch einen kationischen Photoinitiator gehärtet. Bei der kationischen UV-Härtung findet eine Ringöffnung am Oxiran und/oder Oxetan (Epoxidharze und Vinylether) statt. Dies geschieht durch Photolyse von z.B. Diaryliodoniumsalzen, die auf der Erzeugung von starken Protonensäuren beruht. Das Säureproton öffnet den Epoxidring und startet das Kettenwachstum und damit die Härtung.

Im Gegensatz zur radikalischen UV-Härtung von Acrylaten führt dies zu einem niedrigeren Schrumpf und einer guten Haftung auf einer Vielzahl von Substraten. Ein weiterer Vorteil der kationischen Härtung ist die Unempfindlichkeit gegenüber Sauerstoff, wodurch hohe Härtungsgeschwindigkeiten unter normalen Luftbedingungen möglich sind. Feuchtigkeit und alkalische Bedingungen haben dagegen einen tendenziell höheren Einfluss als bei der radikalischen UV-Härtung.

Bei einer kationischen UV-Initiierung ist es unter bestimmten Umständen möglich, die Kettenbildung soweit zu verzögern, dass sie schließlich ohne weitere Strahlenexposition im Dunkeln ablaufen kann. Eventuell kann sie auch stark verzögert werden, so dass sie erst durch eine Wärmebehandlung wieder in Gang kommt oder beschleunigt wird. Eine "Triggerbestrahlung", also ein kurzes Anstoßen durch Bestrahlung reicht aus, um die Aushärtung zu starten. In der möglicherweise folgenden Dunkelreaktion - außerhalb des UV-Lichts - findet dann die weitere Aushärtung statt. Eventuell ist es dabei sogar möglich, dass eine gewisse "Offenzeit" entsteht, das heißt, dass zunächst auf die offene Klebeschicht bestrahlt wird und danach noch Zeit bleibt, die Fügung mit dem zweiten Substrat vorzunehmen, ohne eine Verminderung der letztendlichen Verbundeigenschaften zu erhalten. Diese Vorgehensweise würde es dann erlauben, auch Substrate zu fügen, die nicht UV-transparent sind.

WO 2017/174303 A1 zeigt ein haftklebriges strahlenaktivierbares Klebeband bestehend aus einer strahlenaktivierbaren polymerisierbaren Zusammensetzung bestehend aus: 5 bis 60 Gew.-Teile wenigstens einer Polyurethan-Polymer Filmbildner-Komponente; 40 bis 95 Gew.-Teile wenigstens einer Epoxid-Komponente; 0,1 bis 10 Gew.-Teile wenigstens eines Photoinitiators, und optional 0,1 bis 200 Gew.-Teile wenigstens eines Zusatzstoffs, jeweils bezogen auf die strahlenaktivierbare polymerisierbare Zusammensetzung, wobei sich die Gew.-Teile der Komponenten A und B zu 100 ergänzen.

WO 2018/153985 A1 zeigt einen Wickel- und stanzbaren klebenden Film mit einer durch UV- Strahlung aktivierbaren Klebmasse auf Basis Epoxid, wobei die Klebmasse umfasst: 2 - 40 Gew.-% Filmbildner; 10 - 70 Gew.-% aromatische Epoxidharze; cycloaliphatische Epoxidharze, wobei die cycloaliphatischen Epoxidharze 35 Gew.-% nicht überschreiten; 0,5 - 7 Gew.-% kationische Initiatoren; 0 - 50 Gew.-% epoxidierter Polyetherverbindungen; und 0 - 20 Gew.-% Polyol, wobei sich die Anteile zu 100 % addieren.

JP 4 611463 B2 zeigt einen UV-aktivierbaren Haftklebfilm, welcher sich während der UV-Vernetzung verfärbt.

WO 2018/008742 A1 zeigt einen hitze-aktivierbaren Epoxidklebstoff, welcher ein Monoazo-Pigment aufweist und sich während der Hitze-Vernetzung verfärbt.

EP 0 889 16 A1 zeigt ein Verfahren zur Fixierung eines Fügepartners an einer Glasoberfläche mittels eines Haftklebstoffs, welcher ein Produkt einer UV-Vernetzung ist.

DE 10 2011 013 645 A1 zeigt ein Epoxidharzsystem, welches einen Farbstoff beinhaltet, der beim Aushärten des Epoxidharzsystems durch Farbänderung den Verlauf bzw. den Endpunkt der Aushärtung des Epoxidharzes indiziert.

In industriellen Anforderungen allgemein werden immer höhere Ansprüche an Klebeverbindungen beispielsweise bezüglich Bruchkraft, Temperaturbeständigkeit, Klimawechselbeständigkeit, Feucht- Wärmebeständigkeit etc. gestellt. Ursache hierfür ist, dass zunehmend Klebebänder in immer größerer Menge im Automobilbau eingesetzt werden, z.B. aus Gewichtsgründen oder auch weil damit nicht unbedingt punktförmige Verbindungen geschaffen werden müssen, sondern eine gleichmäßige Verteilung der Fügekraft über eine Klebstoffnaht erfolgt und nicht zuletzt auch, weil die Fügepartner nicht beschädigt werden, wie dies bei gewissen anderen Fügeverfahren wie beispielsweise Verschraubungen oder Vernietungen der Fall ist.

Bei vielen Prozessen zum Beispiel in der Automobilindustrie muss die Aktivierung oder Aushärtung des Klebstoffes/Klebebandes durch den Hersteller des selbigen sichergestellt und nachgewiesen werden. Entsprechend bestehen hohe Anforderungen an die Prozesskontrolle bei der Verarbeitung dieser Klebstoffe.

Abhilfe können UV-aktivierbare Flüssigklebstoffe schaffen, die dazu in der Lage sind, eine Aktivierung durch einen Farbumschlag anzuzeigen. In EP 3 105 276 B1 wird zum Beispiel ein irreversibler Farbumschlag eines Epoxidklebstoffes von blau nach gelb beschrieben.

Ferner bekannt ist der bathochrome Effekt, auch Rotverschiebung genannt, der eine Farbverschiebung beschreibt. Hierbei kommt es zur Verschiebung des Absorptionsspektrums in den längerwelligen, energieärmeren Bereich des elektromagnetischen Spektrums (vgl. K. Schwetlick: Organikum. 15. Auflage, VEB Deutscher Verlag der Wissenschaften, Berlin 1976, S. 513f.)

Diese Farbverschiebung wiederum kann auch durch den halochromen Effekt ("Salzfarbigkeit") erzeugt werden, der die Farbveränderung einer Substanz in Abhängigkeit vom Ladungszustand seiner Moleküle beschreibt. Ein Beispiel hierfür ist Lackmus, welches je nach pH-Wert einer wässrigen Lösung seine Farbe von Rot (sauer) nach Blau (basisch) wechselt.

Mittels der bekannten Systeme kann derzeit nur das Eintreten der Aktivierung bei Flüssigklebstoffen angezeigt werden. Entsprechend besteht der Bedarf eine derartige Prozesskontrolle auch den strukturellen Klebfilmen zugänglich zu machen. Darüber hinaus besteht der Bedarf neben dem Zeitpunkt des Beginns der Aktivierung für die Prozesskontrolle auch den Zeitpunkt einer ausreichenden Aushärtung festzustellen.

### Darstellung der Erfindung

Ausgehend von dem bekannten Stand der Technik ist es eine Aufgabe der vorliegenden Erfindung, einen Wickel- und stanzbaren Klebfilm bereitzustellen, welcher nach der Aktivierung mittels UV- Strahlung einen Farbumschlag als Indikator der Aktivierung und einen erneuten Farbumschlag nach Aushärtung aufweist und somit eine Prozesskontrolle ermöglicht sowie ein entsprechendes Verfahren zur Herstellung eines solchen Films bereitzustellen.

Die Aufgabe wird durch einen Wickel- und stanzbaren klebenden Film mit den Merkmalen des Anspruchs 1 gelöst. Vorteilhafte Weiterbildungen ergeben sich aus den Unteransprüchen.

Entsprechend wird ein Wickel- und stanzbarer klebender Film vorgeschlagen, umfassend eine durch UV-Strahlung aktivierbare Klebmasse auf Epoxidbasis. Erfindungsgemäß umfasst die Klebmasse einen eingemischten Farbstoff beziehungsweise ein eingemischtes Pigment zur Erzeugung eines ersten Farbumschlags nach der Aktivierung der Klebmasse und eines zweiten Farbumschlags nach der Aushärtung der Klebmasse.

Dadurch ist eine in-process-Kontrolle möglich, die neben der Kennzeichnung des Beginns einer Aktivierung der Klebmasse zusätzlich das Fortschreiten der Vernetzungsreaktion der Klebmasse farblich kennzeichnet, sodass der Status bezüglich der Aushärtung sichtbar gemacht werden kann. Der Stand der Technik schweigt bezüglich eines UV-aktivierbaren klebenden Films auf Basis von Epoxidharzklebmassen, bei dem zur Aktivierung außer dem kationischen Fotoinitiator kein weiterer Initiator als Radikalstarter notwendig ist und der durch Zugabe eines Farbstoffs oder Pigments nach der Aktivierung einen Farbumschlag aufweist, welcher als Prozesskontrolle dienen kann.

Offenzeit, Lagerzeit und Aushärtegeschwindigkeit der verwendeten Klebmassen werden durch Zugabe entsprechender Farbstoffe oder Pigmente nicht beeinflusst.

Mit dem vorliegenden Klebfilm kann eine vollständige Prozesskontrolle der UV-Aktivierung mittels Farbumschlag innerhalb des Fügeprozesses möglicher Applikationen der UV-aktivierbaren Klebmassen erfolgen. So kann durch Zugabe des Farbstoffes Sudanblau ein blau eingefärbter Klebstoff hergestellt werden, welcher nach UV-Aktivierung in einen Farbton von rosa- lila umschlägt. Nach einer Dauer von ca. 24 Stunden verschiebt sich der Farbton des Klebstoffs wieder Richtung blau, was auf den Abbau bzw. die Abreaktion der im Klebstoff enthaltenen Säure zurückzuführen ist. Somit hat der Anwender eine Kontrolle über den Aktivierungs- bzw. Reaktivitätszustand des Klebfilms.

Die Verarbeitung und Beschichtung der Klebmasse kann über einen Lösemittel- oder Hotmeltprozess erfolgen. Auch über die sogenannte Syruptechnologie, bei der der filmbildende Anteil erst bei der Beschichtung aus Monomeren oder Oligomeren aufgebaut wird, sind die Verarbeitung und Beschichtung möglich.

Der klebende Film ist im nicht aktivierten Zustand haftklebend und kann so bei der Verarbeitung wie ein "normales" Haftklebeband behandelt werden, d.h. er kann leicht haftend appliziert und gegebenenfalls auch repositioniert werden. Aus dem Klebeband können Stanzteile gefertigt werden, die vor der Applikation auf den jeweiligen zu verklebenden Teilen durch UV-Licht aktiviert werden können, um nach der Vernetzung einen (semi-)strukturellen Verbund zu erzeugen.

Üblicherweise sind auch Abdeckungen (Release Liner) Bestandteil von Klebebändern. Hier können prinzipiell alle allseits bekannten Arten von Release Linern eingesetzt werden.

Die Härtung der Klebebänder und Stanzteile wird schließlich durch UV-Licht aktiviert, bevorzugt durch UVA- oder UVC-Licht. Erst dann werden die Fügepartner endgültig und strukturell gefügt. Da die Härtungsreaktion in mehreren Schritten abläuft, ist auch nach der Aktivierung noch eine gewisse Zeitspanne vorhanden, während der die Fügeteile endgültig ausgerichtet und gefügt werden können, eine weitere Aktivierung nach dem Anstoßen der Härtung durch UV-Licht ist nicht mehr notwendig.

Die Dauer des Ablaufs der Dunkelreaktion hängt stark von verschiedenen Faktoren ab, z.B. der eingesetzten Harzkomponente (cycloaliphatisches oder aromatisches Epoxidharz), der Kettenlänge, dem Initiatortyp, der Bestrahlungszeit, der Bestrahlungsdosis (UV-Wellenlänge) oder auch der Temperatur. Die Aushärtezeit nach der Bestrahlung kann in Abhängigkeit von den genannten Faktoren und deren Zusammenspiel zwischen 10 Sekunden und 60 Minuten betragen.

Es sind 0,001 bis 0,2 Gew.-%, bevorzugt 0,01 bis 0,07 Gew.-% und besonders bevorzugt 0,015 bis 0,04 Gew.-% des Farbstoffs beziehungsweise des Pigments in die Klebmasse eingemischt. Bei Konzentrationen geringer als 0,001 Gew.-% ist die Einfärbung der Klebmasse visuell nicht mehr prozesssicher detektierbar, bei Konzentrationen größer als 0,2 Gew.- % entsteht durch den Farbstoff oder das Pigment und dessen/deren Amingruppen bzw. Stickstoffverbindungen ein basisches Milieu, welches eine Reaktion der Supersäure mit den Epoxidgruppen und einer Azogruppe verhindert.

In einer nicht erfindungsgemäßen Weiterbildung ist der Farbstoff oder das Pigment ein Azofarbstoff oder ein Azopigment. Der Farbstoff oder das Pigment weisen unter der Einwirkung einer Säure einen Farbumschlag auf. Beispiele für Azofarbstoffe sind Methylrot, Methylorange, Kongorot und Alizaringelb R. Farbstoffe oder Pigmente der Azogruppe sind in dieser nicht erfindungsgemäßen Weiterbildung ausschlaggebend für den Farbumschlag. Sie wechseln durch Protonierung bei Unterschreitung bestimmter pH-Werte die Farbe. Beispielhaft ist nachfolgend für den Azofarbstoff Methylrot dargestellt, welcher in sauren Medien in Rot und als protonierte Form vorliegt (nachfolgend rechte Struktur) und in basischen Medien in Gelb und deprotoniert vorliegt (nachfolgend linke Struktur).

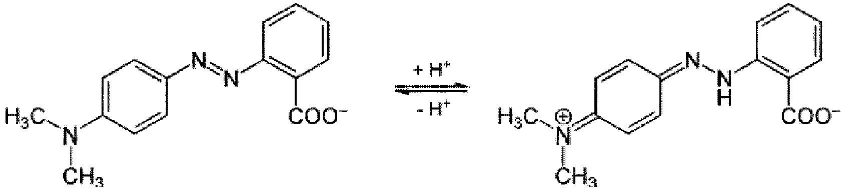

Unter Einwirkung von erhöhter Luftfeuchte fällt der Farbumschlag geringer aus, da sich die entstehenden Säureteilchen bevorzugt an die OH-Ionen des Wassers anlagern und somit weniger an den Farbstoff bzw. das Pigment. Gleichzeitig ist in diesen Fällen das ausgehärtete Klebeband weniger eng vernetzt, was sich in geringeren Festigkeiten im Zugversuch und gleichzeitig größeren Bruchdehnungen zeigt.

In einer weiter bevorzugten Ausführungsform umfasst die Klebmasse:
a. 2 - 50 Gew.-% Filmbildner,
b. 10 - 70 Gew.-% aromatische Epoxidharze,
c. 0,5 - 7 Gew.-% kationischer Initiator,
d. 0,001 - 0,2 Gew.-% Sudanblau
e. cycloaliphatische Epoxidharze, wobei die cycloaliphatischen Epoxidharze 35 Gew.-% nicht überschreiten,
f. 0 - 50 Gew.-% epoxidierter Polyetherverbindungen, und
g. 0 - 20 Gew.-% Polyol,
wobei sich die Anteile zu 100% addieren.

Die Klebmasse weist nach der UV-Aktivierung eine Offenzeit von 10 Sekunden bis 60 Minuten auf, während der der Film haftklebend ist, bevor er schließlich komplett ausgehärtet ist und seine Endfestigkeit erreicht hat.

In einer bevorzugten Weiterbildung liegt der klebende Film als trägerloses UV-aktivierbares Transferklebeband vor.

In einer bevorzugten Weiterbildung umfasst der klebende Film unterschiedliche Klebstoffsysteme, von denen mindestens eines ein UV-aktivierbares System ist.

In einer bevorzugten Weiterbildung umfasst der klebende Film einen UV-transparenten oder UV- intransparenten Träger.

In einer bevorzugten Ausgestaltung umfasst der klebende Film mindestens eine UV- oder thermisch aktivierbare Klebmasse.

In einer bevorzugten Ausgestaltung ist der Wickel- und stanzbare klebende Film insbesondere zur strukturellen Verklebung von Metallen, Glas, Keramiken, Glasfaserkunststoff (GFK), Kohlefaserkunststoff (CFK) und weiteren höher energetischen Oberflächen geeignet.

In einer weiter bevorzugten Ausführungsform weist der Wickel- und stanzbare klebende Film in Abhängigkeit von Formulierungsdetails, Strahlendosis und zu verklebenden Substraten bei der Verklebung Festigkeiten zwischen 6 und 20 MPa auf.

In einer weiteren bevorzugten Ausgestaltung ist der Wickel- und stanzbare klebende Film zur (semi-) strukturellen Verklebung von Kunststoffen und weiteren niederenergetischen Oberflächen geeignet.

### Kurze Beschreibung der Figuren

Bevorzugte weitere Ausführungsformen der Erfindung werden durch die nachfolgende Beschreibung der Figuren näher erläutert. Dabei zeigen:
Figur 1 schematisch eine UV aktivierbare Klebmasse vor der Aktivierung
Figur 2 schematisch eine UV-Aktivierung der UV aktivierbare Klebmasse aus Figur 1;
Figur 3 schematisch einen Farbumschlag der UV-aktivierbaren Klebmasse unmittelbar nach der Aktivierung; und
Figur 4 schematisch einen Farbumschlag der UV-aktivierbaren Klebmasse 24 h nach der Aktivierung.

### Detaillierte Beschreibung bevorzugter Ausführungsbeispiele

Nachfolgend wird die Herstellung eines Klebfilms und dessen UV-Aktivierung unter Bezugnahme auf die beiliegenden Figuren beschrieben. Mittels des hierin beschriebenen Herstellungsverfahrens wurden Prüflinge erzeugt. Die Prüflinge wurden verschiedenen Untersuchungen unterzogen, um deren Eigenschaften zu testen. Die Ergebnisse der Untersuchungen werden nachfolgend ebenfalls näher erläutert.

Die Klebmasse weist die vorstehend beschriebene Zusammensetzung auf.

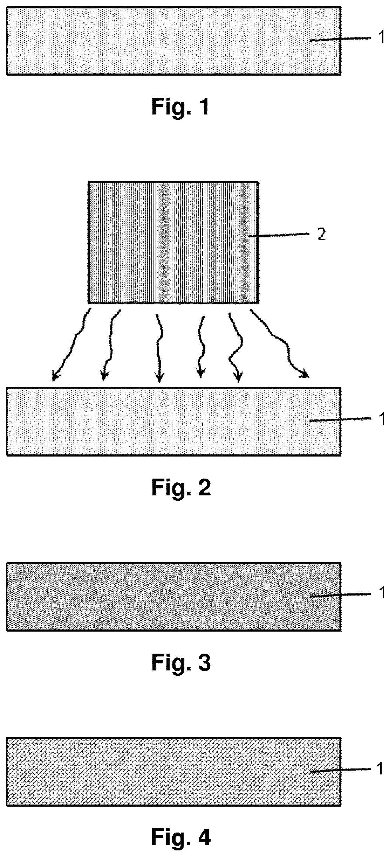

In Figur 1 ist schematisch eine UV-aktivierbare Klebmasse 1 dargestellt. Die vorliegende Klebmasse 1 umfasst die folgende Zusammensetzung:
a. 2 - 50 Gew.-% Filmbildner,
b. 10 - 70 Gew.-% aromatische Epoxidharze,
c. 0,5 - 7 Gew.-% kationischer Initiator,
d. 0,001 - 0,2 Gew.-% Farbstoff oder Pigment
e. cycloaliphatische Epoxidharze, wobei die cycloaliphatischen Epoxidharze 35 Gew.-% nicht überschreiten,
f. 0 - 50 Gew.-% epoxidierter Polyetherverbindungen, und
g. 0 - 20 Gew.-% Polyol,
wobei sich die Anteile zu 100% addieren.

Die Klebmasse weist nach der UV-Aktivierung eine Offenzeit von 10 Sekunden bis 60 Minuten auf, während der der Film haftklebend ist.

Bei dem Farbstoff bzw. dem Pigment handelt es sich in einer nicht erfindungsgemäßen Weiterbildung um einen Azofarbstoff oder ein Azopigment und insbesondere solche Azo-Substanzen, die unter der Einwirkung von Säure einen Farbumschlag aufweisen. In der nachstehenden Tabelle ist der erfindungsgemäße Farbstoff aufgelistet:

**Tabelle 1**

| | |
|---|---|
| Fett-Blau B01 | Blauer Anthrachinon-Farbstoff der Firma Clariant Produkte (Deutschland)GmbH |

Ein Farbumschlag nach UV-Aktivierung oder thermischer Aktivierung findet bei Zugabemengen zwischen 0,001 und 0,2 Gew.-% des Farbstoffs bzw. des Pigments statt. Bei Konzentrationen geringer als 0,001 Gew.-% ist die Einfärbung der Klebmasse visuell nicht mehr prozesssicher detektierbar, bei Konzentrationen größer als 0,2 Gew.-% entsteht durch den Farbstoff oder das Pigment und deren Amingruppen bzw. Stickstoffverbindungen ein basisches Milieu, welches eine Reaktion der Supersäure mit den Epoxidgruppen und der Azogruppe verhindert.

Aus den Experimenten hat sich ein bevorzugter Bereich von 0,01 bis 0,07 Gew.-% und besonders bevorzugt von 0,015 bis 0,04 Gew.-% des Farbstoffs bzw. Pigments ergeben.

Unter Einwirkung von erhöhter Luftfeuchte fällt der Farbumschlag geringer aus, da sich die entstehenden Säureteilchen bevorzugt an die OH-Ionen des Wassers anlagern und somit weniger an den Farbstoff bzw. das Pigment. Gleichzeitig ist in diesen Fällen das ausgehärtete Klebeband weniger eng vernetzt, was sich in geringeren Festigkeiten im Zugversuch und gleichzeitig größeren Bruchdehnungen zeigt.

Die lösemittelhaltige Klebmasse wird mittels Rakel auf eine silikonisierte Polyesterfolie (Dicke 50 µm) aufgetragen. Danach wird das Ganze zunächst 10 Minuten bei Raumtemperatur und anschließend 10 Minuten bei 80°C im Umluftofen getrocknet. Die Auftragsmenge wird so eingestellt, dass nach dem Trocknen (Entfernen des Lösemittelgemisches) ein haftklebriger (klebriger) Film mit einer Dicke von ca. 150 µm vorliegt.

Für die Handhabung der Rohstoffe, des Klebstoffs und für die Beschichtung sind keine Schutzmaßnahmen gegen UV-Licht notwendig. Es reicht, in normaler Laborumgebung entfernt von der UV-Lampe zu arbeiten. Eine weitere Abschirmung wird nicht vorgenommen.

Figur 2 zeigt schematisch die UV-Aktivierung der UV-aktivierbaren Klebmasse 1 mittels einer UV-Quelle 2. Bei der UV-Quelle kann es sich beispielsweise um UV-C-Licht aus einer Entladungslampe oder UV-A-Licht aus einer UV-A-LED-Quelle handeln.

Versuche mit einer UV-C-Lampe werden mit einer UV-Laboranlage der Fa. Beltron mit Transportband und UV-C-Strahler mit einem Strahlungsmaximum bei 256 nm durchgeführt. Das Transportband wird mit 2 m/min betrieben. Die Bestrahlungsdosis im UV-C-Bereich, gemessen mit einem UV Power Puck II der Fa. EIT Instrument Market Group, beträgt 197 mJ/cm².

Alternativ können die Klebmassen trotz einer deutlich höheren Wellenlänge auch mit einer UV-LED- Anlage aktiviert werden. Es sind ähnliche Bestrahlungszeiten wie bei der UV-C-Anlage möglich und die Ergebnisse in Offenzeit und Verklebungsfestigkeit liegen im gleichen Bereich.

Versuche mit einer UV-LED-Anlage werden mit einer LED Spot-Lampe 100 der Fa. Hönle, die eine UV-LED (Wellenlänge 365 nm) und eine Bestrahlungskammer umfasst durchgeführt. Die Prüflinge werden 15 Sekunden in der Bestrahlungskammer bestrahlt. Die Bestrahlungsdosis, gemessen mit einem UV Power Puck II der Fa. EIT Instrument Market Group, beträgt 5000 mJ/cm².

Figur 3 zeigt die Klebmasse 1 nach einem ersten Farbumschlag ausgelöst durch die UV-Aktivierung.

In Figur 4 ist schematisch der Farbumschlag einer UV-aktivierbaren Klebmasse 1 24 h nach der Aktivierung dargestellt. Diese Klebmasse ist hinsichtlich des Vernetzungsgrades in Bezug auf die während der Vernetzung vorliegende Temperatur abreagiert.

Nachfolgend werden die Begriffe Offenzeit, Zeit bis zur Handhabungsfestigkeit und Aushärtezeit näher erläutert.

Unter Offenzeit wird die maximal mögliche Zeitdauer zwischen Entnahme vom Bestrahlungsband (UV-C) bzw. Entnahme aus der Bestrahlungskammer (UV-A) und dem Zeitpunkt der Fügung mit dem zweiten Substrat verstanden. In dieser Zeit können die Fügeteile gefügt werden. Die Offenzeit ist so definiert, dass in dieser Zeit die Klebeschicht noch haftklebrig (tackig) ist. Sie wird bestimmt, indem bei den Klebfilmen die Klebrigkeit ihrer Oberfläche nach der Bestrahlung mit dem Finger geprüft wird. Direkt nach der Bestrahlung ist der Klebfilm noch klebrig/tackig. Nach einer gewissen Zeit ist eine spürbare Abnahme der Tackigkeit zu bemerken, die dann schnell bis schließlich hin zu einer tackfreien Oberfläche abfällt. Die Offenzeit wird festgemacht an dem Zeitpunkt, bei dem die Tackigkeit merklich abnimmt, so dass anschließend kein Tack mehr vorhanden ist.

Es zeigt sich, dass, so lange die Oberflächen noch klebrig sind, ein Fügen möglich ist und die anschließende Aushärtung zu einer homogenen Klebeverbindung führt. Sobald die Oberflächen an Tack verlieren, ist der Aushärtevorgang schon so weit fortgeschritten, dass ein Fügen nicht mehr möglich ist. Dies zeigt sich dann in stark verringerten Festigkeitswerten, gemessen an der quasistatischen Zugscherfestigkeit.

Zusätzlich kann mittels des für diese Klebfilme neuen Farbumschlags die Aktivierung detektiert werden sowie durch die weitere zeitliche Veränderung der Farbe nach der Aktivierung eine Bestimmung der Offenzeit ermöglicht werden. Die Fügung der Klebfilme geschieht direkt nach der UV-Aktivierung.

### Aushärtezeit:

Die Aushärtezeit ist der Zeitraum zwischen der Fügung und der endgültigen Festigkeit. Alle Beispielrezepturen sind spätestens nach 24 Stunden vollständig ausgehärtet. Deshalb wurde meist 24 Stunden gewartet bis zur Messung der quasistatischen Zugscherfestigkeit. Bei einem Wert von über ca. 6 MPa spricht man von einer strukturellen Festigkeit oder strukturellen Klebung. Durch den zugegebenen Farbstoff bzw. das zugegebene Pigment ist es möglich, anhand des Farbtons zu erkennen, ob die Rezeptur vollständig ausgehärtet ist. Dieser Zustand ist in Figur 4 gezeigt. Die Klebmasse 1 ist hinsichtlich des Vernetzungsgrades in Bezug auf die während der Vernetzung vorliegende Temperatur abreagiert.

Für die Anwendung gewünscht ist eine ausreichende Offenzeit. Vorteilhaft ist ebenfalls eine schnelle Handhabungsfestigkeit, falls die Klebung schon bald nach der Fügung (z.B. beim Transport der Teile) einer ersten Belastung standhalten muss, beziehungsweise um auf das Fixieren der Teile verzichten zu können. Für die vollständige Aushärtung sind dagegen 24 Stunden ausreichend, da erfahrungsgemäß erst nach dieser Zeit eine endgültige Belastung der Klebung erfolgt (Dauerbelastung oder Schockbelastung).

Offenzeit und Aushärtezeit sind Folgen der Reaktionsgeschwindigkeit der Aushärtereaktion. Diese Reaktion beginnt mit der UV-Aktivierung und endet mit der vollständigen Aushärtung des Klebfilms. Die Aushärtung ist dann vollständig, wenn die Endfestigkeit der Klebeverbindung erreicht ist. Während der Offenzeit und Aushärtezeit können verschiedene Phasen mit unterschiedlichen Reaktionsgeschwindigkeiten ablaufen, es kann zu Verzögerungen und Beschleunigungen kommen, so dass insgesamt eine bestimmte Offenzeit und Aushärtezeit resultieren. Über die Rezeptur, die Bestrahlungsart, -Intensität und -dauer und über das Wärmemanagement (Temperaturen) im Verklebungsprozess können Offenzeit und Aushärtezeit gesteuert werden.

Die Zeit bis zur Handhabungsfestigkeit bezeichnet die Zeitspanne, die nach dem Fügen verstreicht, bis die Festigkeit der Verbindung so hoch ist, dass geklebte Teile schon transportiert und weiter verarbeitet werden können. Erfahrungen zeigen, dass die Handhabungsfestigkeit dann erreicht ist, wenn die quasistatische Zugscherfestigkeit 2 Mpa erreicht. Das ist eine Festigkeit, die genügend Spielraum lässt für die Belastungen in einem industriellen Fertigungsprozess.

### Prüfmethoden

### d) Farbumschlag

Der Farbumschlag wird visuell erfasst und mittels Fotos dokumentiert. So erfolgt eine Erfassung zeitlich unmittelbar nach der Aktivierung. Der angegebene Farbton entspricht der Wahrnehmung von fünf verschiedenen Probanden.

### b) Quasistatische Zugscherprüfung

Als Kenngröße für die Festigkeit der Klebung auf GFK werden Zugscherversuche nach DIN EN 1465 (2009) bei 23°C ± 2°C und 50 % ± 5 % relativer Luftfeuchte mit einer Prüfgeschwindigkeit von 2 mm/min durchgeführt. Die Substrate werden mit Isopropanol gereinigt und anschließend gefügt. Die Aushärtung erfolgt durch Bestrahlung mit UV-Licht und die mechanische Prüfung erfolgt 24 h nach der Aktivierung. Die Ergebnisse sind in Mpa (N/mm²) angegeben. Angegeben ist jeweils der Mittelwert aus fünf Messungen inkl. Standardabweichung.

### c) Schälprüfung

Der Schälwiderstand der ausgehärteten Klebebänder auf Glas wird in Anlehnung an DIN EN 1939 (1996) bei 23°C ± 2°C und 50 % ± 5 % relativer Luftfeuchte mit einer Prüfgeschwindigkeit von 100 mm/min und einem Abzugswinkel von 90° bestimmt. Die Proben werden mittels UV-Licht ausgehärtet und 24 h nach der Aktivierung geprüft. Die Ergebnisse sind in N/mm angegeben. Angegeben ist jeweils der Mittelwert des Weiterreißwiderstandes aus fünf Messungen inkl. Standardabweichung.

### d) Zugprüfung

Als Kenngröße für die Festigkeit des reinen Klebstofffilms im ausgehärteten Zustand werden Zugversuche in Anlehnung an DIN EN ISO 527 (2012) bei 23°C ± 2°C und 50 % ± 5 % relativer Luftfeuchte mit einer Prüfgeschwindigkeit von 10 mm/min durchgeführt. Hierzu werden aus ausgehärteten Klebfilmen Streifen mit einer Breite von 19 mm und einer Länge von 100 mm geschnitten. Die Schichtdicke beträgt in den dargestellten Ergebnissen 0,2 mm. Die Proben werden mittels UV-Licht ausgehärtet und 24 h nach der Aktivierung geprüft. Die Ergebnisse sind in Mpa (N/mm²) angegeben. Angegeben ist jeweils der Mittelwert aus fünf Messungen inkl. Standardabweichung.

### Beispiele

In Tabelle 2 sind Beispiele bezüglich der Zusammensetzungen in Bezug auf die Auswahl der Farbstoffe oder Pigmente zusammengefasst, wobei die Mengenangaben Gewichtsteile bezeichnen. K1 ist eine erfindungsgemäße Formulierung. V1 ist ein klebender Transferfilm ohne Zugabe eines Farbstoffs oder Pigments:

**Tabelle 2**

| Beispiel: | K1 | K2 | K3 | K4 | V1 |
|---|---|---|---|---|---|
| | | | | | |
| Klebmasse (KM) | KM 1 | KM 1 | KM 1 | KM 1 | KM 1 |
| Fett-Blau B01 | 0,02 | 0,01 | | | |
| Orasol Yellow 081 | | 0,02 | 0,02 | | |
| Heliogen Green L8730 | | | | 0,19 | |

In Tabelle 3 sind die Ergebnisse der Zugscher-, Zug- und Schälprüfungen sowie des Farbumschlags zusammengefasst.

**Tabelle 3**

| Beispiel: | K1 | K2 | K3 | K4 | V1 |
|---|---|---|---|---|---|
| | | | | | |
| Zugscherfestigkeit [MPa] | 6,8 ± 1,0 (CF) | 7,1 ± 0,7 (CF) | 7,7 ± 0,9 (CF) | 0,3 ± 0,1 (AF) | 6,7 ± 1,0 (AF/CF) |
| Schälwiderstand [N/mm] | 0,73 ± 0,02 (AF) | 0,58 ± 0,12 (AF) | 0,44 ± 0,03 (AF) | Nicht messbar | 0,79 ± 0,06 (AF) |
| Zugfestigkeit [MPa] | 1,9 ± 0,1 | 1,6 ± 0,1 | 1,7 ± 0,1 | Nicht messbar | 2,1 ± 0,5 |
| Farbumschlag unmittelbar nach Aktivierung (visuell) | Von Cyanblau nach Rosa-Lila | Von Grün nach Farblos | Kein Farbumschlag | Kein Farbumschlag | Kein Farbumschlag |
| Legende: AF: Adhäsionsbruch; CF: Kohäsionsbruch | | | | | |

Die Klebfilme K1, K2, K3, K4 und V1 besitzen jeweils dieselben UV-aktivierbaren Klebmassen. Lediglich der jeweilige Farbstoff bzw. das Pigment wurde variiert, um Unterschiede in der Auswahl der Farbmittel aufzuzeigen.

Die Klebfilme nach K1, K2, K3 und V1 unterscheiden sich im Rahmen der Standardabweichung in der Zugscherfestigkeit und der Zugfestigkeit nicht signifikant. Somit kann gezeigt werden, dass der Einsatz des Farbmittels oder des Pigments zur Aktivierungs- bzw. Aushärtekontrolle keinen negativen Einfluss auf diese mechanischen Kenngrößen zeigt. Ebenfalls im Rahmen der Standardabweichung ohne signifikante Unterschiede ist der Schälwiderstand der Klebfilme nach K1 und V1. Hier sind die Schälwiderstände der Rezepturen K2 und K3 etwas niedriger, was auf den Einfluss des gelben Farbstoffs zurückzuführen ist.

K4 zeigt keine messbaren Zugfestigkeiten und Schälwiderstände, die Zugscherfestigkeit liegt auf dem Niveau des unausgehärteten Klebfilms. Somit konnte der Nachweis der oberen Konzentration des Farbstoffs bzw. Pigments erbracht werden.

In Tabelle 4 ist die Konditionierung der Klebfilme vor der Aktivierung unterschiedlich vorgenommen worden. So wurden in Beispiel K5 die Klebmasse ohne direkten Feuchtezutritt auf die Klebfläche gelagert. In Beispiel K6 wurde die Klebmasse bei einer relativen Luftfeuchte von 70 % für eine Stunde konditioniert und anschließend aktiviert.

**Tabelle 4**

| Beispiel: | K5 | K6 |
|---|---|---|
| | | |
| Klebmasse (KM) | KM 1 | KM 1 |
| Fett-Blau B01 | 0,02 | 0,02 |
| Temperatur [°C] | 23 ± 2 | 23 ± 2 |
| Relative Luftfeuchte [%] | Ohne direkten Feuchtezutritt auf die Klebfläche | 70 ± 5 |

In Tabelle 5 sind die Ergebnisse der Zugprüfungen und des Farbumschlags unmittelbar nach der Aktivierung zusammengefasst.

**Tabelle 5**

| Beispiel: | K5 | K6 |
|---|---|---|
| | | |
| Zugfestigkeit [MPa] | 1,4 ± 0,1 | 0,8 ± 0,1 |
| Bruchdehnung [%] | 200 ± 10 | 400 ± 40 |
| Farbumschlag unmittel nach Aktivierung (visuell) | Von Cyanblau nach Rosa-Lila | Von Cyanblau nach Hellblau |

Die Zugfestigkeiten der Klebfilme nach K5 und K6 weisen im Rahmen der Standardabweichung einen Unterschied hinsichtlich Zugfestigkeit und Bruchdehnung auf. So ist die Bruchdehnung des für eine Stunde unter erhöhter Luftfeuchte gelagerten Klebfilms mit 400 % doppelt so hoch. Die Zugfestigkeit des ohne direkten Feuchtezutritt gelagerten Klebfilms ist im Vergleich zu dem Klebfilm, welcher bei 70 % rel. Luftfeuchte konditioniert wurde, um etwa 0,6 MPa höher. Ebenfalls signifikant ist der Unterschied im Farbumschlag. Bei dem Klebfilm K5 wurde ein Farbumschlag unmittelbar nach Aktivierung von Cyanblau nach Rosa-Lila detektiert, wohingegen bei K6 unter erhöhtem Feuchteeinfluss lediglich ein Farbumschlag von Cyanblau nach Hellblau festgestellt werden konnte.

Somit konnte der Einfluss der umgebenden Luftfeuchte auf den Farbumschlag und die Zugfestigkeit bzw. Bruchdehnung nachgewiesen werden.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

## Patentansprüche

1. Wickel- und stanzbarer klebender Film umfassend eine durch UV-Strahlung aktivierbare Klebmasse auf Epoxidbasis, welche einen kationischen Photoinitiator aufweist, und 0,001 bis 0,2 Gew.-% von in die Klebmasse eingemischtem Sudanblau zur Erzeugung eines ersten Farbumschlags nach der Aktivierung der Klebmasse und eines zweiten Farbumschlags nach der Aushärtung der Klebmasse.

2. Wickel- und stanzbarer klebender Film gemäß Anspruch 1, **dadurch gekennzeichnet, dass** die Klebmasse weiter umfasst:
a. 2 - 50 Gew.-% Filmbildner,
b. 10 - 70 Gew.-% aromatische Epoxidharze,
c. 0,5 - 7 Gew.-% kationischer Initiator,
d. 0,001 - 0,2 Gew.-% Sudanblau
e. cycloaliphatische Epoxidharze, wobei die cycloaliphatischen Epoxidharze 35 Gew.-% nicht überschreiten
f. 0 - 50 Gew.-% epoxidierter Polyetherverbindungen, und
g. 0 - 20 Gew.-% Polyol,
wobei sich die Anteile zu 100% addieren.

3. Wickel- und stanzbarer klebender Film gemäß einem der vorhergehenden Ansprüche, **dadurch gekennzeichnet, dass** der klebende Film ein trägerloses UV-aktivierbares Transferklebeband ist.

4. Wickel- und stanzbarer klebender Film gemäß Anspruch 3, **dadurch gekennzeichnet, dass** der klebende Film unterschiedliche Klebstoffsystemen umfasst, von denen mindestens eines ein UV-aktivierbares System ist.

5. Wickel- und stanzbarer klebender Film gemäß Anspruch 1 oder 2, **dadurch gekennzeichnet, dass** der klebende Film einen UV-transparenten oder UVintransparenten Träger umfasst.

## Claims

1. Windable and stampable adhesive film, comprising a UV-activatable adhesive mass based on epoxide, which comprises a cationic photoinitiator, and 0,001 to 0,2 wt% of sudan blue which is mixed into the adheisve mass for creating a frist color change after the activation of the adhesive mass and a second color change after the curing of the adhesive mass.

2. Windable and stampable adhesive film according to claim 1, **characterized in** the adhesive mass further comprising:
a. 2 - 50 wt% film former,
b. 10 - 70 wt% aromatic epoxy resins,
c. 0,5 - 7 wt% cationic initiator,
d. 0,001 - 0,2 wt% sudan blue
e. cycloaliphatic epoxy resins, wherein the cycloaliphatic epoxy resins constitute at most 35 wt%
f. 0 - 50 wt% epoxidized polyether compounds, and
g. 0 - 20 wt% polyol,
wherein the components add up to 100%.

3. Windable and stampable adhesive film according to one of the preceding claims, **characterized in that** the adhesive film is a carrier-less UV-activatable transfer tape.

4. Windable and stampable adhesive film according to claim 3, **characterized in that** the adhesive film comprises different adhesive systems, of which at least one is a UV-activatable system.

5. Windable and stampable adhesive film according to claim 1 or 2, **characterized in that** the adhesive film comprises a UV-transparent or UV-intransparent carrier.

## Revendications

1. Film adhésif enroulable et pouvant être découpé à l'emporte-pièce, comprenant une masse adhésive à base d'époxyde activable par UV, laquelle comprend un photo-initiateur cationique et de 0,001 à 0,2 % en poids de colorant bleu Sudan incorporé à la masse adhésive pour provoquer un premier changement de couleur après l'activation de la masse adhésive et un second changement de couleur après le durcissement de la masse adhésive.

2. Film adhésif enroulable et pouvant être découpé à l'emporte-pièce selon la revendication 1, **caractérisé en ce que** la masse adhésive soit composée:
a. de 2 à 50 pour cent en poids d'agent filmogène,
b. de 10 à 70 pour cent en poids de résines époxy aromatiques,
c. de 0,5 à 7 pour cent en poids d'amorceurs cationiques,
d. de 0,001 à 0,2 pour cent en poids de colorant bleu Sudan,
e. des résines époxy cyclo-aliphatiques, les résines époxy cyclo-aliphatiques n'excédant pas 35 pour cent en poids,
f. de 0 à 50 pour cent en poids de composés polyéthers améliorés par des époxy, et
g. de 0 à 20 pour cent en poids de polyol,
la somme des proportions valant 100 %.

3. Un film adhésif enroulable et pouvant être découpé à l'emporte-pièce selon l'une des revendications précédentes, **caractérisé en ce que** le film adhésif est un ruban adhésif de transfert activé par UV sans support.

4. Un film adhésif enroulable et pouvant être découpé à l'emporte-pièce selon la revendication 3, **caractérisé en ce que** le film adhésif comprend différents systèmes adhésifs, dont au moins un est un système activé par UV.

5. Un film adhésif enroulable et pouvant être découpé à l'emporte-pièce selon la revendication 1 ou 2, **caractérisé en ce que** le film adhésif comprend un support transparent ou opaque aux UV.
